# EUROPEAN PATENT SPECIFICATION

(11) **EP 3 957 820 B1**
(45) Date of publication and mention of the grant of the patent: **04.10.2023**
(21) Application number: 21190673.0
(22) Date of filing: 10.08.2021
(51) Int. Cl.: E21F 17/16, B65G 5/00

(54) **ARRANGEMENT FOR STORING ENERGY**
ANORDNUNG ZUR SPEICHERUNG VON ENERGIE
AGENCEMENT DE STOCKAGE D'ÉNERGIE

(30) Priority: 10.08.2020 SE 2050942
(43) Date of publication of application: 23.02.2022
(73) Proprietor: Hetes Energy AB, 11551 Stockholm (SE)
(72) Inventor: Pilebro, Hans, 11551 Stockholm (SE); Eriksson, Anders, 11551 Stockholm (SE); Wilhelmsson, Per-Åke, 11551 Stockholm (SE); Strand, Tobias, 11551 Stockholm (SE); Ivner, Bengt, 11551 Stockholm (SE)
(74) Representative: AWA Sweden AB

(56) References cited:
- GB-A- 2 013 318
- LI ZHONGKUI ET AL: "Experimental study of water curtain performance for gas storage in an underground cavern", JOURNAL OF ROCK MECHANICS AND GEOTECHNICAL ENGINEERING, vol. 1, no. 1, 26 October 2009 (2009-10-26), pages 89-96, XP055839371, ISSN: 1674-7755, DOI: 10.3724/SP.J.1235.2009.00089
- OKAZAKI YURIKO ET AL: "Construction of water curtain system for the hydraulic containment type LPG Storage Cavern", INTERNATIONAL JOURNAL OF THE JCRM, vol. 10, no. 2, 1 December 2014 (2014-12-01), pages 32-41, XP055880164, DOI: 10.11187/ijjcrm.10.32
- FOH S ET AL: "UNDERGROUND HYDROGEN STORAGE FINAL REPORT", UNDERGROUND HYDROGEN STORAGE FINAL REPORT; [BNL (SERIES)], DEPARTMENT OF ENERGY AND ENVIRONMENT, BROOKHAVEN NATIONAL LABORATORY, UPTON, NEW YORK US , 1 December 1979 (1979-12-01), pages I-XXVI, 1, XP002664730, Retrieved from the Internet: URL:http://www.osti.gov/energycitations/pu rl.cover.jsp?purl=/6536941-eQcCso/ [retrieved on 2011-11-30]

## Description

### Technical Field

The present disclosure relates generally to the technical field of arrangements for storing energy and, more particularly, to arrangements for storing energy using compressed hydrogen.

### Background

Electrical energy is today produced to a large extent by combustion of fossil fuels such as coal, petroleum products and natural gas. Many of these conventional electrical energy production methods create a large amount of carbon dioxide which adds to the greenhouse effect. Alternatives that are more environmentally friendly are available, for example solar or wind energy sources or excess hydro power. However, these sources are variable and cannot be used at any given time, for example if the sun goes down or if there is no wind.

There is a need for efficient storage of electrical energy within the area of modern energy technology. Especially there is a need for efficient storage of energy from variable renewable energy (VRE) sources such as solar, wind or excess hydropower energy sources. Electrical energy needs to be used at the time of production, the excess energy is today often stored in rechargeable batteries. Energy from VRE sources is today also stored as thermal energy, i.e. by heating a material and storing the energy as heat. The thermal energy is often stored in a fluid, e.g. water, above ground in insulated tanks, in the ground in insulated pits or underground in caverns (natural or excavated). These methods are used in different parts of the world to store thermal energy between different seasons, e.g. storing temporary surplus heat from summer months to be used during the colder winter months. So, energy from for example weather depending sources is stored and used at a later point when the demand and, preferably, its financial value is higher. There is also a high interest for using the storage for short-term variations, e.g. day and night, and always actively storing surplus heat. Some of these storages may also be used for storage of a colder fluid, to be used for cooling, as well as for fluid having intermediate temperatures for use in low temperature systems.

Electrical energy from VRE sources may also be stored in the form of chemical energy, by the production of gas. Some gases may be created by using electricity to force chemical processes. For example, hydrogen may be created via steam-methane reforming, where high-temperature steam is used to produce hydrogen. The hydrogen may then be stored and used at a later point in time. Today most hydrogen storages are metal cases that can withstand high pressures to be able to compress lots of hydrogen into a small space. However, these storages are hard to manufacture and not economically viable.

The methods presented in prior art have a number of drawbacks, for example storing energy in the form of heat will always have a certain loss due to heat dissipation, and there is a need for improved arrangements for storing energy from energy sources depending on certain conditions as for example weather and wind. There is a need for improved arrangements and systems for both long term and short term storing.

### Summary

The inventors have come to the insight that using gases to store energy may be of vital importance for future energy use. Especially storing hydrogen in large scale that allow for an easily managed and easily sealed storage is of high need in the field. As mentioned above, hydrogen is today often gotten from the steam-methane reforming, however other ways of getting hydrogen are available. For example, the electrolysis of water yields hydrogen in gas form.

Water is readily available in most parts of the world, and methods for splitting water into oxygen and hydrogen are known and well developed. Using electrolysis to separate water into oxygen and hydrogen gas is a process that is known in prior art. Hydrogen has the highest energy content of any element considering energy per weight. Storing the hydrogen can give the user the possibility to extract the stored energy at a later point in time, for example when the seasons have changed, and more energy is needed. Storing the hydrogen in a compressed state may be advantageous due to space saving, and hence be more financially beneficial. There are several known ways to convert hydrogen to power, for example using hydrogen fuel cells, hydrogen gas turbines, combined-cycles or other hydrogen to power processes. The exhaust gas produced in hydrogen to power processes is pure water vapor which may be condensed and recycled. However, some combustion engines can also have a bi-product of nitrogen oxides NOx which need to be taken care of conventionally.

The present disclosure seeks to provide at least some embodiments of energy storage arrangements which overcome at least some of the above-mentioned drawbacks. More specifically, the present disclosure aims at providing at least some embodiments offering large scale energy storage arrangements that can be placed in the ground to store energy in the form of hydrogen. Further, the present disclosure aims at providing at least some embodiments that also uses tunnels or caverns to store excess thermal energy created as a residual product from the energy storage arrangement.

In a first aspect of the present disclosure, there is provided an underground energy storage arrangement for storing pressurized gas according to claim

In a second aspect of the present disclosure, there is provided a system for storing and producing energy comprising a hydrogen producing unit, configured to produce hydrogen according to claim 11.

Thus, there is provided an arrangement or a system with a first function of providing a storage for a pressurized gas in an unlined cavern. Further, there is also provided the function of ensuring a seal for the unlined cavern using a water seal comprising a plurality of boreholes connected to a water source to ensure a pressure high enough for achieving a sealing effect. The present arrangement and system have many advantages, a first advantage being that energy may be easily stored in the form of pressurized gas. This ensures that energy from, for example, variable renewable energy sources can fully be stored and reused at a later point in time. This ensures a more environmentally friendly and energy efficient use of these energy sources. A second advantage is that the unlined cavern is unlined. This ensures easier construction and more cost-effective building. Further, the pressurized gas may have a lower pressure than in conventional gas storages due to the sizes available for unlined caverns. A third advantage is that the arrangement may be used together with other arrangements used today for storing thermal energy, for example as described in relation to the second aspect of the invention.

By the term "unlined cavern", it is meant a hollowed-out cavern in for example bedrock that has only been supported for stability reasons. For example, an unlined cavern may be obtained by excavation by drilling and blasting or full face drilling tunnel boring machines (TBM).

By the term "balance water source", it is meant a water source arranged to balance the pressure of for example a gas. If there is less gas there is more water and vice versa, it acts as a balancing source of water.

According to an embodiment the arrangement may further comprise a filling layer between the at least one unlined cavern and the water seal configured to fill cracks in the bedrock. The present embodiment is advantageous in that larger cracks in the bedrock may be filled to ensure that the pressurized gas and the water seal does not leak. The filling layer may be a so-called grouting layer, i.e. cement filling cracks in the bedrock to ensure a gas tight cavern. Depending on the construction area and the local conditions different amounts of filling may be needed. The filling layer, or grouted zone may be configured to fill cracks in the bedrock creating high gradient water flow into the cavern, thus preventing the compressed gas to leak out into fissures into the surrounding rock and further up to the ground surface. It also reduces the amount of water from the surrounding tunnels and boreholes to enter the unlined cavern.

According to another embodiment the at least one unlined cavern has a spherical shape and the waterfilled boreholes are arranged around the at least one unlined cavern. The present embodiment is advantageous in that a large at least partially spherical unlined cavern is easily constructed, for example by excavation by drilling and blasting and creating a large cavern in bedrock. The present embodiment can also be used as a first step and work as a test arrangement for fundamental testing. It is understood that different shapes and geometries for the unlined cavern are available.

According to another embodiment said at least one unlined cavern extends in a horizontal plane. The present embodiment is advantageous in that the unlined cavern may extend in a horizontal direction underground in the bedrock. The unlined cavern may be formed by a large drill head Tunnel Boring Machine (TBM) and may extend in any direction and be of any size, thereby ensuring storage room for a larger volume of pressurized gas. Extending in a horizontal direction underground ensures that the unlined cavern is equally pressurized, and also that any water or liquid that enters the unlined cavern is equally distributed.

According to another embodiment the at least one unlined cavern extends in an at least partially straight, circular, square or rectangular path in said plane. It is also understood that any combination of the geometries above, and others, are possible. During construction different geometries might be more or less viable. The present embodiment is advantageous in that the arrangement may be arranged around other arrangements available for storing energy. For example, the arrangement may be arranged around a thermal energy storage which is configured to receive residual heat created in different procedures of the arrangement. In that way one may ensure that a high percentage of the original energy received from the VRE sources is stored. Further if said unlined cavern extends around a thermal energy storage, the unlined cavern may be chilled using parts of the thermal energy storage that are at a lower temperature. This ensures that the gas has a lower temperature which in turn ensures a smaller volume which is beneficial.

According to another embodiment the at least one unlined cavern may have a cross-section at least partially circular, and the water seal may further comprise at least, a first tunnel arranged above a first side of the at least one unlined cavern, a second tunnel arranged on a second side of the at least one unlined cavern, a third tunnel arranged on a third side of the at least one unlined cavern, and a fourth tunnel arranged on a fourth side of said at least one unlined cavern. And the boreholes may be arranged between the tunnels fluidly connecting them to each other creating the water seal around the at least one unlined cavern. The present embodiment is advantageous in that construction of the water seal is easier and the tunnels ensures that the bore holes are constantly filled with water applying pressure on the filling layer of the unlined cavern. Further it is advantageous in that a thermal gradient flow for cooling by inlet of cold water to the top water curtain tunnel is possible.

According to another embodiment the at least one unlined cavern is at least two unlined caverns configured to store said pressurized gas. The present embodiment may include multiple unlined cavern arrange within the same water seal, or with individual water seals. The advantages are that more hydrogen may be stored within the same water seal. The unlined caverns may be so called, multi-caverns, in for example concentric circles or other forms, e.g. one outer unlined cavern having a circular shape with first radius and an inner unlined cavern having a circular shape having a second, smaller, radius may be arranged in a horizontal plane with the outer unlined cavern adjacent the inner unlined cavern. The unlined caverns may also be arranged adjacent in a vertical direction.

According to another embodiment the pressurized gas may be hydrogen. The present embodiment is advantageous in that hydrogen is the element with the highest energy content with regards to mass. It is also advantageous in that there are many available ways to create hydrogen from energy, for example via electrolysis of water. Hydrogen is also easily converted back to energy using for example hydrogen fuel cells.

According to another embodiment at least part of the hydrogen stored in the at least one unlined cavern is created via electrolysis of water. The present embodiment is advantageous in that electrolysis of water is a convenient way to transform electricity to hydrogen gas. The process has few backsides, such as no environmentally dangerous exhaust gases or radioactive residual products. Electrolysis of water yields oxygen gas and hydrogen gas, the former can either be used for oxygen appliances or with care released to the atmosphere while the hydrogen can be stored for later use when energy needs are higher. Oxygen can also be stored separately to be used in the fuel cells to create electricity.

According to another embodiment the at least one unlined cavern may have a volume of at least 2 000 m³. The volume may for example be between 2 000 m³ and up to 1000 000 m3 or more. The present embodiment is advantageous in that, the larger the unlined cavern the larger volume of gas may be stored, i.e. the more energy can be stored. It is further advantageous in that the larger the unlined cavern is, the less pressurized the gas needs to be.

According to an embodiment of the second aspect of the invention the thermal energy storage may comprise at least two caverns for holding a fluid, wherein the caverns are connected to each other by at least one tunnel, such that fluid communication is allowed between the caverns. The present embodiment is advantageous in that the thermal energy storage may in an efficient way store residual heat from other parts of the system.

According to another embodiment the thermal energy storage is further configured to cool said pressurized gas stored in said underground energy storage arrangement. The present embodiment is advantageous in that the gas stored within the unlined cavern may be cooled down by the cold water in the bottom part of the caverns. This is advantageous in that colder gas takes less place and more gas can be stored in the unlined cavern. The balance water source can therefore also advantageously be of a certain depth with connection to the cold part. It is further envisioned that the pressurized gas may be cooled down before being sent down to said unlined cavern. The pressurized gas may for example be cooled in connection to it being compressed, or after being compressed. This is further advantageous seeing that cooled gas takes up less space than warm gas. While compressing the gas the gas may heat up, residual heat may be led to the thermal energy storage and a cold part of the thermal energy storage may be used to further cool the gas before storing it.

According to another embodiment the hydrogen producing unit may be powered by a variable renewable energy, VRE, source. The present embodiment is advantageous in that VRE sources today are not used to their full capacity. The energy created is often hard to store with large losses. Ensuring that all the energy is stored for later use is advantageous for the environment and is economically beneficial.

According to another embodiment the at least one unlined cavern of the arrangement for storing energy extends at least partially around the arrangement for storing thermal energy. The present embodiment is advantageous in that the arrangements may be built in a smaller volume underground which is easier from a constructional perspective.

According to another embodiment the arrangement or system comprises a degassing unit configured to degas balance water of the balance water source. The present embodiment is advantageous in that the balance water source may be a natural lake or stream and by degassing the water before returning to the source it ensures no negative environmental effects are present.

### Brief Description of the Drawings

Exemplifying embodiments will now be described in more detail, with reference to the following appended drawings:
Figure 1 schematically illustrates an exemplary underground energy storage arrangement in accordance with an embodiment;
Figure 2 schematically illustrates a cross-section of an unlined cavern of an underground energy storage arrangement in accordance with an embodiment;
Figure 3 schematically illustrates an exemplary system for storing and producing energy in accordance with an embodiment;
Figure 4 illustrates an exemplary flow diagram explaining a method of how to use an underground energy storage arrangement in accordance with an embodiment.

### Detailed Description of the Drawings

As illustrated in the figures, the sizes of the elements and regions may be exaggerated for illustrative purposes and, thus, are provided to illustrate the general structures of the embodiments. Like reference numerals refer to like elements throughout.

Exemplifying embodiments will now be described more fully hereinafter with reference to the accompanying drawings, in which currently preferred embodiments are shown. The invention may, however, be embodied in many different forms and should not be construed as limited to the embodiments set forth herein; rather, these embodiments are provided for thoroughness and completeness, and fully convey the scope of the invention to the skilled person.

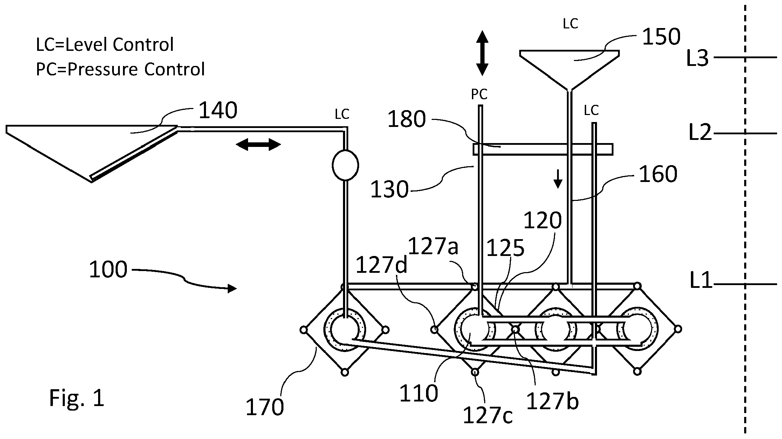

With reference to Figure 1 an exemplary underground energy storage arrangement 100 for storing pressurized gas is illustrated. The arrangement 100 in Fig. 1 comprises three unlined caverns 110 configured to store the pressurized gas. It is however understood that there may only be one as well as be a plurality, or at least one, unlined cavern in an arrangement 100. Fig. 1 will now be described as if it has one unlined cavern 110, however the same principles and features are valid for the two unlined caverns adjacent to the right of the first unlined cavern 110. The unlined caverns 110 are arranged at a first vertical level L1. The vertical level L1 is preferably underground in bedrock and the unlined cavern may extend horizontally in the ground. The arrangement 100 further comprises a water seal 120 arranged around the unlined cavern 110. The water seal 120 is configured to act as a seal for the unlined cavern 110 and comprises a plurality of waterfilled boreholes 125 arranged around the unlined cavern. The boreholes 125 are drilled in the bedrock at angles so that they are connected and fully enclose the unlined cavern 110. The arrangement 100 further comprises a first pipe 130 connected to the unlined cavern 110. The first pipe 130 is configured to allow the pressurized gas to move to and from the unlined cavern 110. The first pipe may be excavated vertically. The arrangement 110 further comprises a balance water source 140 arranged with a water surface at a second vertical level L2 higher than the first vertical level L1. The second vertical level L2 may for example be the ground surface. The balance water source 140 may be connected to the unlined cavern 110 and configured to allow water to fill parts of the unlined cavern 110 when not filled with the pressurized gas. The balance water source 140 may have a larger volume that the unlined cavern 110. The arrangement 100 further comprises a water source 150 arranged at a third vertical level L3 higher than the first vertical level L1 and the second vertical level L2. The water source 150 may be connected to the water seal 120 through at least one second pipe 160 ensuring water supply to the boreholes. Since the water source 150 is located at a higher vertical layer than the balance water source 140 a higher pressure is present in the water seal 120 than in the unlined cavern 110 since the unlined cavern 110 is pressurized by the balance water source 140. Through this the water seal 120 may seal the unlined cavern 110 ensuring that the pressurized gas is maintained within.

The arrangement 100 of Fig. 1 further comprises a first tunnel 127a arranged on a first side of the unlined cavern 110. The first side may for example be a top side of the unlined cavern 110. The arrangement 100 further comprises a second tunnel 127b arranged on a second side of the unlined cavern 110. The second side may for example be a right side of the unlined cavern 110. The arrangement 100 further comprises a third tunnel 127c arranged on a third side of the unlined cavern 110. The third side may for example be a bottom side of the unlined cavern 110. The arrangement 100 further comprises a fourth tunnel 127c arranged on a fourth side of the unlined cavern 110. The fourth side may for example be a left side of the unlined cavern. The boreholes 125 may be arranged between the tunnels 127a,b,c,d fluidly connecting them to each other creating the water seal around the unlined caver 110. It is understood that there may be more tunnels or less tunnels.

The waterfilled boreholes 125 may be drilled with different radii and with different distance in-between them. It is understood that different alternatives are available to a person skilled in the art.

The unlined cavern 110 may as in Fig. 1 be connected to other unlined caverns through different pipes and systems. In Fig. 1 the first pipe 130 extends to all three unlined caverns 110 to be able to move hydrogen up and down from the unlined caverns. Further, the balance water source 140 is connected to the bottom of all the unlined caverns 110 to ensure proper function of the arrangement 100.

The arrangement 100 of Fig. 1 may comprise a plurality of unlined caverns 110 arranged in various ways. As in Fig. 1 the arrangement 100 may comprise unlined caverns 110 arranged adjacent one another in a horizontal direction. It is also understood that arranging the unlined caverns 110 in a vertical pattern is also possible. For example, a new unlined cavern may be placed adjacent the unlined cavern 110 so that the new unlined cavern shares tunnels 127b and 127cwith the unlined cavern 110. The second tunnel 127b may then be considered the first tunnel of the new unlined cavern, and the third tunnel 127c may be considered the fourth tunnel of the new unlined cavern. Arranging multiple unlined caverns in this manner gives a combined use of the tunnels, boreholes and ultimately water seal which may be advantageous. It is understood that many different ways of arranging a plurality of unlined caverns 110 is possible.

The arrangement 100 may be configured to take water from the bottom of the balance water source 140 and the water source 150. The bottom of these water source may hold colder water than the top of the water sources. Using the colder water from the balance water source 140 and the water source 150 ensures that the balance water, the water seal 120 and ultimately the stored gas has a lower temperature. The balance water source 150 may for example be a stream or lake, obtaining water from the bottom may ensure water at a temperature at around 4 degrees Celsius.

The gas is compressed by a system of balance water, which means that the pressurized gas is stored at a relative constant pressure. The pressure is created from the water surface in the balance water source 140 at the second vertical level, that may be at the ground surface and the water interface between compressed gas and balance water in the unlined cavern 110. To achieve minimum span of pressure difference in the gas in the unlined cavern 110 it is advantageous if the unlined cavern is horizontal. The most suitable cross section of the unlined cavern 110 is circular with a diameter of 20 meters, however other diameters and geometries of the cross section is available. The maximum span and height must be designed according to local geological conditions at the actual site, which means that also elliptical, parabolic and other shapes can be utilized to fulfil design criteria.

The at least one unlined cavern 110 is sealed from out-leakage of the compressed gas by use of the water seal 120 including in Fig. 1 a system of tunnels 127a,b,c,d and boreholes 125 surrounding the unlined storage cavern 110. To achieve a high gradient in-leakage of water to the unlined cavern 110 the complete periphery of the storage cavern may be grouted to fill the cracks in the rock. This may be advantageous in that it prevents the out-leakage of gas from the unlined cavern 110 and reduces in-leakage of water that may leak from the boreholes 125 and tunnels 127a,b,c,d of the water seal 120. The pressure in the water seal 125 is secure by a static pressure from the water source 150 at the third vertical level L3, which may for example be a dam at the surface. The pressure of the water seal 120 may be exceeding the gas pressure to a certain amount at all operational conditions. L1 refers to top of unlined cavern.

The gas stored in the unlined cavern 110 may be any gas. It may for example be non-condensable gases at temperatures above zero degrees C, such oxygen or hydrogen. Hydrogen is advantageous since it has the highest energy to weight ratio of any substance. It is also easily available from multiple processes.

During operation of the arrangement 100 gas, e.g. hydrogen, may dissolve into the balance water from the balance water source 140 in the unlined cavern to a maximum up to saturated conditions. Further, water from the water seal 120 may leak into the unlined cavern 110 and by gravity mix into the balance water. The density of the balance water is depending on temperature and degree of saturation of the gas stored in the unlined cavern 110. As the density of water is related to temperature, the temperature of the water seal 120 should preferably be lower than that of the balance water that has balanced out the gas and reached the unlined cavern 110. The degree of saturation will depend on multiple different variables such as:
- Gas pressure (depth of caverns).
- Duration of storage of the compressed gas in the cavern.
- How the gas is injected and extracted.
- How in-leakage of the water seal into the caverns is distributed (unfavorable from the cavern roof).
- How outlet and inlet of balance water is arranged from/to the cavern.

To secure acceptable conditions for all operational conditions an underground arrangement 100 may also comprise a degassing unit 170. The degassing unit 170 may also be designed for testing and evaluation of conditions as described above during the startup and commissioning period of the complete arrangement. The degassing unit 170 may consist of two chambers by a size of preliminary 2 000 m3, each arranged as vertical/cylindrical cones connected by a vertical shaft/pipes. The degassing unit 170 should preferably fulfil testing of all conditions included for storage of compressed gas as described above. In operation the gases from the complete storage will be recovered in the upper chamber, if required, by a compressor and brought back to the gas storage in the unlined cavern 110. Alternatively, the gas can be brought to a stack, common for the whole arrangement 100 and connected plants, and flared to the atmosphere as water vapor (at combustion of hydrogen gas if the gas stored is hydrogen). The degassing unit 170 may be arranged between the balance water source 140 and the unlined cavern 110.

The arrangement 100 may further comprise a machine room 180 from where different machines are located. The machine room could also be located at the ground surface, the control room could be located at the surface, combined with adjacent facilities (for example in a thermal energy storage facility).

A process control system may be included in the arrangement 100 for operation of remote controlled valves, pumps, compressors, filters etc. within the arrangement 100 and connected systems. Level control (LC) may be achieved via control level indicators (LI) which are installed to indicate interfaces between gases and liquids within the arrangement 100. Pressure control (PC) may be achieved via pressure indicators (PI) that may be installed to indicate pressure in gases and liquids connected within the arrangement 100. For gas control, gas indicators (GI) may be installed to indicate gas quality and mixture of gases within the arrangement 100. Safety arrangements will be installed according to requirement of authorities.

The arrangement 100 may further comprise a multitude of safety arrangements. These may for example include filters to ensure that nothing unwanted enters the arrangement from the balance water source 140 or the water source 150. For example, the balance water source 140 may be a stream and filters may be needed to ensure no fish or other things from the stream enters the arrangement 100. It is clear to a person skilled in the art that many different solutions are available.

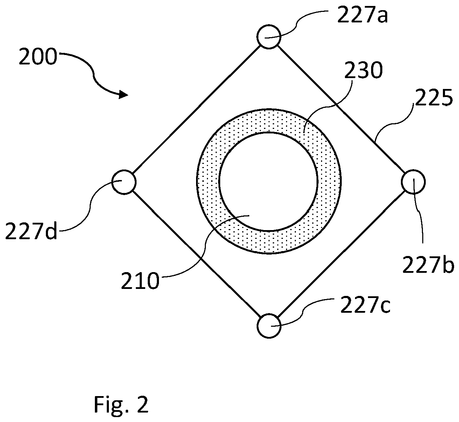

With reference to Figure 2 a cross-sectional view 200 of an unlined cavern 210 and a water seal according to an embodiment is illustrated. The unlined cavern 210 may have a cross-section in the shape of a circle. However, it may also have any other geometrical shape. In Fig. 2 the unlined cavern 210 may extend in any direction, for example it may extend in a direction orthogonal to a vector between the first tunnel 227a and the third tunnel 227c. However, it may further be of a spherical shape not extending horizontally in any particular direction. Fig. 2 also depict tunnels 227a,b,c,d that are configured to be waterfilled. Between the tunnels 227a,b,c,d boreholes 225 are made to fluidly connect them and create a water seal around the unlined cavern. The tunnels 227a,b,c,d may extend together with the unlined cavern 210. If the unlined cavern 210 is a spherical cavern the tunnel 227a,b,c,d may be arranged around the spherical unlined cavern 210 so that the second tunnel 227b and the third tunnel 227c may be connected and create a liquid seal around the unlined cavern.

In Fig. 2 a filling layer 230 arrange between the unlined cavern and the boreholes 225 and tunnels 227 a,b,c,d of the water seal is seen. The filling layer 230 may be configured to fill cracks in said bedrock creating high gradient water flow into the cavern, thus preventing the compressed gas to leak out into fissures in the surrounding rock and further up to the ground surface.

The unlined cavern 210 may also be multiple unlined caverns arranged within the same water seal. They may for example extend circularly and be in concentric circles with one unlined cavern having a smaller radius than the other.

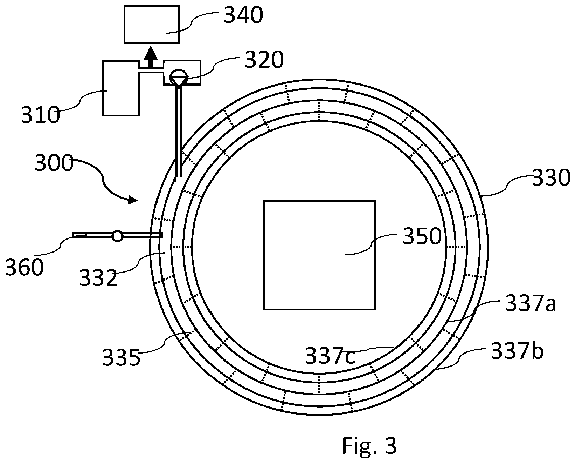

With reference to Figure 3 an exemplary system 300 for storing and producing energy is illustrated. The system 300 comprises a hydrogen producing unit 310 configured to produce hydrogen. The system 300 further comprises a compressing unit 320 configured to pressurize the hydrogen. The system 300 further comprises an underground energy storage arrangement 330 for storing pressurized gas as disclosed within this application, the arrangement 330 is configured to store the hydrogen. Further the system 300 comprises a power producing unit 340 configured to turn the hydrogen into power. The system 300 further comprises a thermal energy storage unit 350 configured to store residual heat and cooling created at least during hydrogen production, hydrogen compression and power production.

The hydrogen producing unit 310 may be powered by a variable renewable energy, VRE, source. For example, it may be powered by solar cells to create hydrogen. The hydrogen producing unit 310 may for example by an electrolysis unit configured to split water into oxygen and hydrogen gas. The hydrogen producing unit 310 may also be a steam-methane reforming unit configured to create hydrogen from natural gas, however this kind of process may be less advantageous compared to electrolysis of water due to environmental reasons.

The compressing unit 320 may be a compressor configured to compress the hydrogen created by the hydrogen producing unit 310. The compressing unit 320 may be a conventional compressor, however it may also be the balance water source as described with reference to Fig. 1 compressing the hydrogen and pressing it down toward the arrangement 330, if the electrolysis is performed at a level just below the bottom of the unlined cavern

The underground energy storage arrangement 330 may be an arrangement as described within this application. In Fig. 3 the arrangement 330 all features as described with reference to Fig. 1 or 2. In Fig. 3 an unlined cavern 332, tunnels 337a,b,c and boreholes 335 are shown. The boreholes 335 will be placed at intervals ensuring a complete water seal around the unlined cavern 332.

The power producing unit 340 may be configured to turn hydrogen into electrical energy. For example, the power producing unit 340 may be at least one hydrogen fuel cell. Hydrogen fuel cells can create electrical energy from hydrogen gas with the addition of oxygen. The residual product from hydrogen fuel cells are water steam which advantageously can be condensate and reused in the system. For example, if the hydrogen producing unit 310 is an electrolysis unit the water created from the power producing unit 340 may be recycled to the electrolysis unit to once again create hydrogen for storage.

The thermal energy storage unit 350 may be configured to store residual heat created at least during hydrogen production, hydrogen compression and power production. The thermal energy storage unit 350 may for example be an excavated cavern that holds a fluid, e.g. water, which stores thermal energy as heat in the fluid. A system with both an arrangement 330 and a thermal energy storage unit 350 may have a high efficiency and ensure that the electrical energy turned into hydrogen does not go to waste. The thermal energy storage unit 350 may be connected to the at least one unlined cavern 332. This may be advantageous since the bottom part of a thermal energy storage unit 350 often stores colder liquid and the unlined cavern 332 may be chilled by the thermal energy storage unit 350 keeping the hydrogen stored within cold. Cold hydrogen takes less space and more can be kept within the unlined cavern 332.

The thermal energy storage unit 350 may comprise at least two caverns for holding a fluid, wherein the caverns are connected to each other by at least one tunnel, such that fluid communication is allowed between the caverns. The caverns may extend at least partially along a respective circular arc. Such an arrangement may accomplish an effective thermal storage which can be operated in many different areas at once. Further, this kind of thermal energy storage unit 350 combines the advantages of a relatively cheap seasonal storage capacity and the possibilities of retrieving large output and providing/retrieving heat quickly to/from the thermal energy storage. Also, the use of at least two caverns facilitates covering a larger volume of the ground with storage space.

The system 300 may also comprise a degassing unit 360 as describes with reference to Fig. 1.

The system 300 may for example be constructed in combination with hydropower stations, existing or new stations. The electrical energy received from the hydropower station may then be used to power the hydrogen producing unit 310 to create hydrogen to store. The upstream and downstream dams of the hydropower station may further be used for the balance water source and the water source of the underground energy storage arrangement 330 according to the invention respectively. The downstream dam may be used as the balance water source, as described with reference to Fig. 1, applying pressure on the hydrogen. The upstream dam may give a sufficient pressure for the water seal of the arrangement 330 and be connected to the tunnels 337a,b,c and/or the boreholes 335.

The system 300 may for example also be constructed in combination with a combined heat and power plant (CHP). This may be done to utilize existing infrastructure within CHP plants utilizing fossil fuels such as coal, petroleum products or natural gas. The system 300 combined with hydrogen for trigeneration of heating, cooling and electricity can be used. A safe economical transfer to a sustainable environmentally friendly system will be possible.

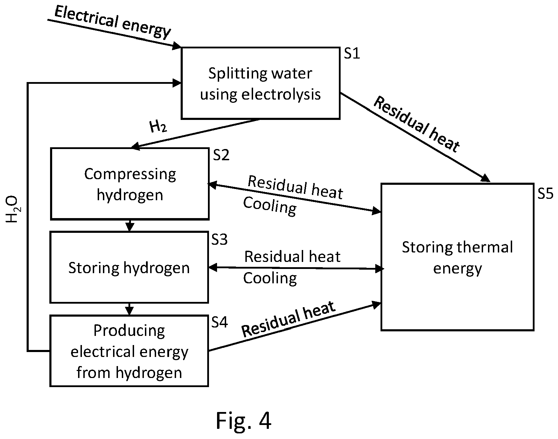

With reference to Figure 4 an exemplary flow diagram explaining a method of how to use an underground energy storage arrangement in accordance with an embodiment is illustrated.

In a first step S1 hydrogen is produced by splitting water using electrolysis. Other ways of producing hydrogen are possible and the skilled person understand that there are multiple options. The hydrogen production is powered by electrical energy. This electrical energy may for example come from energy sources that are variable depending on factors such as weather, for example solar cell sources. In a second step S2 the hydrogen produced is compressed so that the hydrogen takes less place and is easier to store. The hydrogen may be compressed by a conventional compressor or for example by a water source. In a third step S3 the hydrogen is stored, it may for example be stored in an underground energy storage arrangement according to an embodiment of the invention and described with reference to Fig. 1-3. In a fourth step S4 hydrogen electrical energy is obtained from the hydrogen. For example, by using hydrogen fuel cells that generates electricity from hydrogen in combination with oxygen. The rest product from this reaction is water which can be recycled to the first step S1. Step four S4 can occur after storing the hydrogen for different periods of time depending on the need for electricity. In a fifth step S5 thermal energy may be stored. The thermal energy may come from the other steps S1-S4, for example when producing electricity in step four S4 heat is often created as a byproduct. This heat can then be stored in a thermal energy storage. The thermal energy storage may be any thermal energy storage available or describes within this application.

It is further envisioned that the gas, for example hydrogen gas, may be cooled after being compressed and prior to storing the gas as part of the second step S2. This may for example be done by using the thermal energy storage. The thermal energy storage may receive residual heat from the compressing process and may also be used to cool the gas down to take up lesser space prior to storing. The gas may also be cooled in any other conventional way.

## Claims

1. An underground energy storage arrangement (100) for storing pressurized gas comprising,
at least one unlined cavern (110;210) configured to store said pressurized gas, wherein said at least one unlined cavern (110;210) is arranged at a first vertical level (L1);
a water seal (120) arranged around said at least one unlined cavern (110;210) configured to act as a seal for said at least one unlined cavern (110;210), wherein said water seal (120) comprises a plurality of waterfilled boreholes (125;225) drilled in a bedrock at angles such that the waterfilled boreholes (125;225) are connected with each other, enclosing said at least one unlined cavern (110;210);
at least one first pipe (130) connected to said at least one unlined cavern (110;210) and configured to allow said pressurized gas to move to and from said at least one unlined cavern (110;210);
a balance water source (140) arranged at a second vertical level (L2) higher than said first vertical level (L1), wherein said balance water source (140) is connected to said at least one unlined cavern (110;210) and configured to allow water to fill parts of said at least one unlined cavern (110;210) when not filled with said pressurized gas, and wherein said balance water source (140) has a larger volume than said at least one unlined cavern (110;210); and
a water source (150), arranged at a third vertical level (L3) higher than said first vertical level (L1) and said second vertical level (L2), wherein said water source (150) is connected to said water seal (120) through at least one second pipe (160) ensuring water supply to said boreholes (125).

2. The arrangement (100) according to claim 1, further comprising a filling layer (230) arranged between said at least one unlined cavern (110) and said water seal (120) configured to fill cracks in said bedrock.

3. The arrangement (100) according to claim 1 or 2, wherein said at least one unlined cavern (110) has a spherical shape and said waterfilled boreholes (125) are arranged around said at least one unlined cavern (110), wherein the spherical shape is a result of excavation by drilling and blasting.

4. The arrangement (100) according to claim 1 or 2, wherein said at least one unlined cavern (110) extends in a horizontal plane.

5. The arrangement (100) according to claim 4, wherein said at least one unlined cavern (110) extends in an at least partially straight, circular, square or rectangular path in said plane.

6. The arrangement (100) according to claim 4 or 5, wherein said at least one unlined cavern (110;210) has a cross-section at least partially circular, and wherein said water seal (120) further comprises,
a first tunnel (127a; 227a) arranged above a first side of said at least one unlined cavern (110;210);
a second tunnel (127b; 227b) arranged on a second side of said at least one unlined cavern (110;210);
a third tunnel (127c; 227c) arranged on a third side of said at least one unlined cavern (110;210); and
a fourth tunnel (127d; 227d) arranged on a fourth side of said at least one unlined cavern (110;210);
wherein said boreholes (125;225) are arranged between said tunnels (127a,b,c;227a,b,c,d) fluidly connecting them to each other creating said water seal (120) around said at least one unlined cavern (110;210).

7. The arrangement (100) according to any one of the preceding claims, wherein said at least one unlined cavern (110;210) is at least two unlined caverns (110;210) configured to store said pressurized gas.

8. The arrangement (100) according to any one of the preceding claims, wherein said pressurized gas is hydrogen.

9. The arrangement (100) according to claim 8 wherein at least part of said hydrogen stored in said at least one unlined cavern (110;210) is created via electrolysis of water.

10. The arrangement (100) according to any one of the preceding claims wherein said at least one unlined cavern (110;210) has a volume of at least 2 000 m³.

11. A system (300) for storing and producing energy comprising,
a hydrogen producing unit (310), configured to produce hydrogen;
a compressing unit (320) comprising a balance water source (140) or a conventional compressor, configured to pressurize said hydrogen;
an underground energy storage arrangement (330) for storing pressurized gas according to claim 1, configured to store said hydrogen;
a power producing unit (340), configured to turn said hydrogen into power; and
a thermal energy storage unit (350) comprising at least two caverns for holding a fluid, wherein said caverns are connected to each other by at least one tunnel, such that fluid communication is allowed between said caverns, and wherein the thermal energy storage unit (350) is configured to store residual heat created at least during hydrogen production, hydrogen compression and power production.

12. The system (300) according to claim 11, wherein said thermal energy storage (350) is further configured to cool said pressurized gas stored in said underground energy storage arrangement (330) by said thermal energy storage unit (350) being connected to at least one of said unlined caverns (332) of said underground energy storage arrangement (330).

13. The system (300) according to any one of claims 11-12, wherein said hydrogen producing unit (310) is powered by a variable renewable energy, VRE, source.

14. The system (300) according to any one of claims 11-13, wherein said at least one unlined cavern (110) of said arrangement (330) for storing energy extends at least partially around said arrangement (350) for storing thermal energy.

15. The system (300) according to any one of claims 11-14 further comprising a degassing unit (360) configured to degas balance water of the balance water source (140) of said underground energy storage arrangement (330).

## Patentansprüche

1. Unterirdische Energiespeicheranordnung (100) zum Speichern von druckbeaufschlagtem Gas, die Folgendes umfasst:
zumindest eine nicht ausgekleidete Höhle (110; 210), ausgelegt zum Speichern des druckbeaufschlagten Gases, wobei die zumindest eine nicht ausgekleidete Höhle (110; 210) bei einem ersten vertikalen Niveau (L1) angeordnet ist;
eine Wassersperre (120), angeordnet um die zumindest eine nicht ausgekleidete Höhle (110; 210), dazu ausgelegt, als eine Abdichtung für die zumindest eine nicht ausgekleidete Höhle (110; 210) zu wirken, wobei die Wassersperre (120) mehrere wassergefüllte Bohrlöcher (125; 225) umfasst, die bei Winkeln in ein Grundgestein gebohrt sind, sodass die wassergefüllten Bohrlöcher (125; 225) miteinander verbunden sind, die zumindest eine nicht ausgekleidete Höhle (110; 210) einschließend;
zumindest eine erste Leitung (130), verbunden mit der zumindest einen nicht ausgekleideten Höhle (110; 210) und dazu ausgelegt, dem druckbeaufschlagten Gas zu ermöglichen, sich von und zu der zumindest einen nicht ausgekleideten Höhle (110; 210) zu bewegen;
eine Ausgleichswasserquelle (140), angeordnet bei einem zweiten vertikalen Niveau (L2), das höher als das erste vertikale Niveau (L1) ist, wobei die Ausgleichswasserquelle (140) mit der zumindest einen nicht ausgekleideten Höhle (110; 210) verbunden ist und dazu ausgelegt ist, Wasser zu ermöglichen, Teile der zumindest einen nicht ausgekleideten Höhle (110; 210) zu füllen, wenn diese nicht mit dem druckbeaufschlagten Gas gefüllt sind, und wobei die Ausgleichswasserquelle (140) ein größeres Volumen aufweist als die zumindest eine nicht ausgekleidete Höhle (110; 210); und
eine Wasserquelle (150), angeordnet bei einem dritten vertikalen Niveau (L3), das höher als das erste vertikale Niveau (L1) und das zweite vertikale Niveau (L2) ist, wobei die Wasserquelle (150) mit der Wassersperre (120) durch zumindest eine zweite Leitung (160) verbunden ist, Wasserzufuhr zu den Bohrlöchern (125) sicherstellend.

2. Anordnung (100) nach Anspruch 1, ferner umfassend eine Füllschicht (230), angeordnet zwischen der zumindest einen nicht ausgekleideten Höhle (110) und der Wassersperre (120) , ausgelegt zum Füllen von Rissen im Grundgestein.

3. Anordnung (100) nach Anspruch 1 oder 2, wobei die zumindest eine nicht ausgekleidete Höhle (110) eine sphärische Form aufweist und die wassergefüllten Bohrlöcher (125) um die zumindest eine nicht ausgekleidete Höhle (110) angeordnet sind, wobei die sphärische Form ein Ergebnis von Ausbrechen durch Bohren und Sprengen ist.

4. Anordnung (100) nach Anspruch 1 oder 2, wobei sich die zumindest eine nicht ausgekleidete Höhle (110) in einer horizontalen Ebene erstreckt.

5. Anordnung (100) nach Anspruch 4, wobei sich die zumindest eine nicht ausgekleidete Höhle (110) in einem zumindest teilweise geraden, kreisförmigen, quadratischen oder rechteckigen Pfad in der Ebene erstreckt.

6. Anordnung (100) nach Anspruch 4 oder 5, wobei die zumindest eine nicht ausgekleidete Höhle (110; 210) einen Querschnitt aufweist, der zumindest teilweise kreisförmig ist, und wobei die Wassersperre (120) ferner Folgendes umfasst:
einen ersten Tunnel (127a; 227a), angeordnet über einer ersten Seite der zumindest einen nicht ausgekleideten Höhle (110; 210);
einen zweiten Tunnel (127b; 227b), angeordnet an einer zweiten Seite der zumindest einen nicht ausgekleideten Höhle (110; 210);
einen dritten Tunnel (127c; 227c), angeordnet an einer dritten Seite der zumindest einen nicht ausgekleideten Höhle (110; 210); und
einen vierten Tunnel (127d; 227d), angeordnet an einer vierten Seite der zumindest einen nicht ausgekleideten Höhle (110; 210); wobei die Bohrlöcher (125; 225) zwischen den Tunneln (127a,b,c; 227a,b,c,d) angeordnet sind, diese miteinander fluidisch verbindend, so die Wassersperre (120) um die zumindest eine nicht ausgekleidete Höhle (110; 210) erzeugend.

7. Anordnung (100) nach einem der vorhergehenden Ansprüche, wobei die zumindest eine nicht ausgekleidete Höhle (110; 210) mindestens zwei nicht ausgekleidete Höhlen (110; 210) ist, die ausgelegt sind zum Speichern des druckbeaufschlagten Gases.

8. Anordnung (100) nach einem der vorhergehenden Ansprüche, wobei das druckbeaufschlagte Gas Wasserstoff ist.

9. Anordnung (100) nach Anspruch 8, wobei zumindest ein Teil des in der zumindest einen nicht ausgekleideten Höhle (110; 210) gespeicherten Wasserstoffs durch Elektrolyse von Wasser erzeugt wird.

10. Anordnung (100) nach einem der vorhergehenden Ansprüche, wobei die zumindest eine nicht ausgekleidete Höhle (110; 210) ein Volumen von mindestens 2000 m³ aufweist.

11. System (300) zum Speichern und Produzieren von Energie, das Folgendes umfasst:
eine Wasserstoff produzierende Einheit (310), ausgelegt zum Produzieren von Wasserstoff;
eine Verdichtungseinheit (320), umfassend eine Ausgleichswasserquelle (140) oder einen herkömmlichen Verdichter, ausgelegt zum Druckbeaufschlagen des Wasserstoffs;
eine unterirdische Energiespeicheranordnung (330) zum Speichern von druckbeaufschlagtem Gas nach Anspruch 1, ausgelegt zum Speichern des Wasserstoffs;
eine Leistung produzierende Einheit (340), ausgelegt zum Umwandeln des Wasserstoffs in Leistung; und
eine thermische Energiespeichereinheit (350), umfassend mindestens zwei Höhlen zum Halten eines Fluids, wobei die Höhlen miteinander durch zumindest einen Tunnel verbunden sind, sodass Fluidverbindung zwischen den Höhlen erlaubt ist, und wobei die thermische Energiespeichereinheit (350) ausgelegt ist zum Speichern von Restwärme, die zumindest während der Wasserstoffproduktion, Wasserstoffverdichtung und Leistungsproduktion erzeugt wurde.

12. System (300) nach Anspruch 11, wobei der thermische Energiespeicher (350) ferner ausgelegt ist zum Kühlen des in der unterirdischen Energiespeicheranordnung (330) gespeicherten druckbeaufschlagten Gases dadurch, dass die thermische Energiespeichereinheit (350) mit zumindest einer der nicht ausgekleideten Höhlen (332) der unterirdischen Energiespeicheranordnung (330) verbunden ist.

13. System (300) nach einem der Ansprüche 11-12, wobei die Wasserstoff produzierende Einheit (310) durch eine fluktuierende erneuerbare Energie- bzw. VRE-Quelle betrieben wird.

14. System (300) nach einem der Ansprüche 11-13, wobei sich die zumindest eine nicht ausgekleidete Höhle (110) der Anordnung (330) zum Speichern von Energie zumindest teilweise um die Anordnung (350) zum Speichern von thermischer Energie erstreckt.

15. System (300) nach einem der Ansprüche 11-14, ferner umfassend eine Entgasungseinheit (360), ausgelegt zum Entgasen von Ausgleichswasser der Ausgleichswasserquelle (140) der unterirdischen Energiespeicheranordnung (330).

## Revendications

1. Agencement de stockage d'énergie sous-terrain (100) pour stocker un gaz sous pression, comprenant,
au moins une caverne sans revêtement (110 ; 210) configurée pour stocker ledit gaz sous pression, dans lequel ladite au moins une caverne sans revêtement (110 ; 210) est agencée à un premier niveau vertical (L1)
un dispositif d'étanchéité à eau (120) agencé autour de ladite au moins une caverne sans revêtement (110 ; 210), configuré pour servir de dispositif d'étanchéité pour ladite au moins une caverne sans revêtement (110 ; 210), dans lequel ledit dispositif d'étanchéité à eau (120) comprend une pluralité de trous de forage remplis d'eau (125 ; 225) forés dans un soubassement rocheux à des angles tels que les trous de forage remplis d'eau (125 ; 225) soient raccordés les uns aux autres, entourant ladite au moins une caverne sans revêtement (110 ; 210) ;
au moins un premier tuyau (130) raccordé à ladite au moins une caverne sans revêtement (110 ; 210) et configuré pour permettre audit gaz sous pression de se déplacer jusqu'à et depuis ladite au moins une caverne sans revêtement (110 ; 210) ;
une source d'eau d'équilibre (140) agencée à un deuxième niveau vertical (L2) plus haut que ledit premier niveau vertical (L1), dans lequel ladite source d'eau d'équilibre (140) est raccordée à ladite au moins une caverne sans revêtement (110 ; 210) et configurée pour permettre à de l'eau de remplir des parties de ladite au moins une caverne sans revêtement (110 ; 210) lorsqu'elles ne sont pas remplies avec ledit gaz sous pression, et dans lequel ladite source d'eau d'équilibre (140) a un volume plus grand que ladite au moins une caverne sans revêtement (110, 210) ; et
une source d'eau (150), agencée à un troisième niveau vertical (L3) plus haut que ledit premier niveau vertical (L1) et ledit deuxième niveau vertical (L2), dans lequel ladite source d'eau (150) est raccordée audit dispositif d'étanchéité à eau (120) par le biais d'au moins un second tuyau (160) garantissant une alimentation en eau auxdits trous de forage (125).

2. Agencement (100) selon la revendication 1, comprenant en outre une couche de remplissage (230) agencée entre ladite au moins une caverne sans revêtement (110) et ledit dispositif d'étanchéité à eau (120), configurée pour remplir des fissures dans ledit soubassement rocheux.

3. Agencement (100) selon la revendication 1 ou 2, dans lequel ladite au moins une caverne sans revêtement (110) a une forme sphérique et lesdits trous de forage remplis d'eau (125) sont agencés autour de ladite au moins une caverne sans revêtement (110), dans lequel la forme sphérique est un résultat d'excavation par forage et abattage à l'explosif.

4. Agencement (100) selon la revendication 1 ou 2, dans lequel ladite au moins une caverne sans revêtement (110) s'étend dans un plan horizontal.

5. Agencement (100) selon la revendication 4, dans lequel ladite au moins une caverne sans revêtement (110) s'étend en un chemin au moins partiellement droit, circulaire, carré ou rectangulaire dans ledit plan.

6. Agencement (100) selon la revendication 4 ou 5, dans lequel ladite au moins une caverne sans revêtement (110 ; 210) a une section transversale au moins partiellement circulaire, et dans lequel ledit dispositif d'étanchéité à eau (120) comprend en outre
un premier tunnel (127a ; 227a) agencé au-dessus d'un premier côté de ladite au moins une caverne sans revêtement (110 ; 210) ;
un deuxième tunnel (127b ; 227b) agencé sur un deuxième côté de ladite au moins une caverne sans revêtement (110 ; 210) ;
un troisième tunnel (127c ; 227c) agencé sur un troisième côté de ladite au moins une caverne sans revêtement (110 ; 210) ; et
un quatrième tunnel (127d ; 227d) agencé sur un quatrième côté de ladite au moins une caverne sans revêtement (110 ; 210) ;
dans lequel lesdits trous de forage (125 ; 225) sont agencés entre lesdits tunnels (127a, b, c ; 227a, b, c, d), les raccordant fluidiquement les uns aux autre, créant ledit dispositif d'étanchéité à eau (120) autour de ladite au moins une caverne sans revêtement (110 ; 210) .

7. Agencement (100) selon l'une quelconque des revendications précédentes, dans lequel ladite au moins une caverne sans revêtement (110 ; 210) est au moins deux cavernes sans revêtement (110 ; 210) configurées pour stocker ledit gaz sous pression.

8. Agencement (100) selon l'une quelconque des revendications précédentes, dans lequel ledit gaz sous pression est de l'hydrogène.

9. Agencement (100) selon la revendication 8 dans lequel au moins une partie dudit hydrogène stocké dans ladite au moins une caverne sans revêtement (110 ; 210) est créée par l'intermédiaire d'électrolyse d'eau.

10. Agencement (100) selon l'une quelconque des revendications précédentes, dans lequel ladite au moins une caverne sans revêtement (110 ; 210) a un volume d'au moins 2 000 m³.

11. Système (300) pour stocker et produire de l'énergie, comprenant,
une unité de production d'hydrogène (310), configurée pour produire de l'hydrogène ;
une unité de compression (320) comprenant une source d'eau d'équilibre (140) ou un compresseur classique, configuré pour mettre sous pression ledit hydrogène ;
un agencement de stockage d'énergie sous-terrain (330) pour stocker gaz sous pression selon la revendication 1, configuré pour stocker ledit hydrogène ;
une unité de production d'électricité (340), configurée pour transformer ledit hydrogène en électricité ; et
une unité de stockage d'énergie thermique (350) comprenant au moins deux cavernes pour contenir un fluide, dans lequel lesdites cavernes sont raccordées l'une à l'autre par au moins un tunnel, de telle sorte qu'une communication fluidique soit permise entre lesdites cavernes, et dans lequel l'unité de stockage d'énergie thermique (350) est configurée pour stocker de la chaleur résiduelle créée au moins durant la production d'hydrogène, la compression d'hydrogène et la production d'électricité.

12. Système (300) selon la revendication 11, dans lequel ladite unité de stockage d'énergie thermique (350) est en outre configurée pour refroidir ledit gaz sous pression stocké dans ledit agencement de stockage d'énergie sous-terrain (330) par le fait que ladite unité de stockage d'énergie thermique (350) est raccordée à au moins une desdites cavernes sans revêtement (332) dudit agencement de stockage d'énergie sous-terrain (330).

13. Système (300) selon l'une quelconque des revendications 11 et 12, dans lequel ladite unité de production d'hydrogène (310) est alimentée par une source d'énergie renouvelable variable, VRE.

14. Système (300) selon l'une quelconque des revendications 11 à 13, dans lequel ladite au moins une caverne sans revêtement (110) dudit agencement (330) pour stocker de l'énergie s'étend au moins partiellement autour dudit agencement (350) pour stocker de l'énergie thermique.

15. Système (300) selon l'une quelconque des revendications 11 à 14, comprenant en outre une unité de dégazage (360) configurée pour dégazer de l'eau d'équilibre de la source d'eau d'équilibre (140) dudit agencement de stockage d'énergie sous-terrain (330).
